# EUROPEAN PATENT SPECIFICATION

(11) **EP 4 574 535 B1**
(45) Date of publication and mention of the grant of the patent: **05.08.2026**
(21) Application number: 24212825.4
(22) Date of filing: 13.11.2024
(51) Int. Cl.: B60L 15/20

(54) **BATTERY ELECTRIC VEHICLE**
BATTERIEELEKTROFAHRZEUG
VÉHICULE ÉLECTRIQUE À BATTERIE

(30) Priority: 21.12.2023 JP 2023215959
(43) Date of publication of application: 25.06.2025
(73) Proprietor: TOYOTA JIDOSHA KABUSHIKI KAISHA, Aichi-ken, 471-8571 (JP)
(72) Inventor: ISAMI, Yoichiro, TOYOTA-SHI, AICHI-KEN, 471-8571 (JP); IMAMURA, Tatsuya, TOYOTA-SHI, AICHI-KEN, 471-8571 (JP); MOTEKI, Taro, TOYOTA-SHI, AICHI-KEN, 471-8571 (JP)
(74) Representative: Cabinet Beau de Loménie

(56) References cited:
- DE-A1- 102012 223 867
- US-A1- 2013 197 731
- US-A1- 2019 381 894
- US-A1- 2022 080 942
- US-A1- 2023 234 589

## Description

### BACKGROUND OF THE INVENTION

### 1. Field of the Invention

The present disclosure relates to a battery electric vehicle that includes an electric motor as a drive source.

### 2. Description of Related Art

Japanese Unexamined Patent Application Publication No. 2023-107412 discloses a hold assist in a battery electric vehicle that has a function to simulate engine stall. By the hold assist, a brake is actuated, and thereby, it is possible to prevent the vehicle from sliding down on a sloping road due to the action of gravity.

Document US 2023/234589 A1 relates to a control system for an electric vehicle configured to simulate an engine stall which might occur in conventional vehicles while preventing the simulation of the engine stall in an unfavorable situation.

Document DE 10 2012 223867 A1 and US 2019/381894 A1 each relate to a holding device for a motor vehicle on an inclined surface, which comprises an electric drive system with an electric drive motor.

### SUMMARY OF THE INVENTION

The hold assist is a function for preventing a vehicle body from moving rearward or forward due to the action of gravity when the vehicle stopped on a sloping road restarts. As the hold assist function, there is known a function to prevent rearward movement or forward movement due to gravity by actuating the brake on the sloping road. However, in the case where the actuation of the brake is suddenly ended when a drive wheel torque demanded by a driver has become sufficiently large, the drive wheel torque changes discontinuously, and the driver has an uncomfortable feeling. The present disclosure provides a technology that allows a smooth vehicle start while preventing the rearward movement or forward movement on the sloping road due to gravity.

The present disclosure provides a battery electric vehicle in accordance with claim 1.

In the battery electric vehicle according to the aspect of the present disclosure, the hold assist may include outputting the hold assist torque, on condition that the road surface having the gradient is a road surface having an uphill gradient.

In the battery electric vehicle according to the aspect of the present disclosure, the hold assist may include outputting the hold assist torque, on condition that the road surface having the gradient is a road surface having a downhill gradient and a shift switch of the battery electric vehicle is set to reverse.

In the battery electric vehicle according to the aspect of the present disclosure, the hold assist may include starting the output of the hold assist torque, in response to turning-off of brake operation by the driver, wherein the brake operation refers to stepping on the brake pedal by the driver.

In the battery electric vehicle according to the aspect of the present disclosure, the hold assist may include ending the output of the hold assist torque, when the brake operation by the driver is performed in a period after the start of the output of the hold assist torque and before the exceedance of the driver demand torque over the hold assist torque.

In the battery electric vehicle according to the aspect of the present disclosure, the control device may be configured to calculate the driver demand torque using a vehicle model, and the vehicle model may include an engine model in which a virtual engine is modeled, a clutch model in which a virtual clutch is modeled, and a transmission model in which a virtual transmission is modeled.

In the battery electric vehicle in the present disclosure, the hold assist torque is output by the hold assist for preventing the rearward movement or forward movement of the vehicle on the sloping road. Further, the output of the hold assist torque is ended when the drive wheel torque demanded by the driver exceeds the hold assist torque. Moreover, concurrently with the end of the output of the hold assist torque, the driver demand torque is output. Thereby, the drive wheel torque to be output can smoothly transit from the hold assist torque to the torque demanded by the driver. Thus, at the time of the vehicle start on the sloping road, it is possible to perform a smooth vehicle start while preventing rearward movement or forward movement due to gravity.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing the configuration of a battery electric vehicle according to an embodiment of the present disclosure;
FIG. 2 is a diagram showing the configuration of a control device related to a traveling control of the battery electric vehicle;
FIG. 3 is a time chart for describing a hold assist control by the battery electric vehicle;
FIG. 4 is a flowchart showing an example of a process relevant to a hold assist control for an uphill gradient; and
FIG. 5 is a flowchart showing an example of a process relevant to a hold assist control for a downhill gradient.

### DETAILED DESCRIPTION OF EMBODIMENTS

Embodiments of the present disclosure will be described with reference to the accompanying drawings.

### 1. Configuration of Dynamic Power System of Battery Electric Vehicle

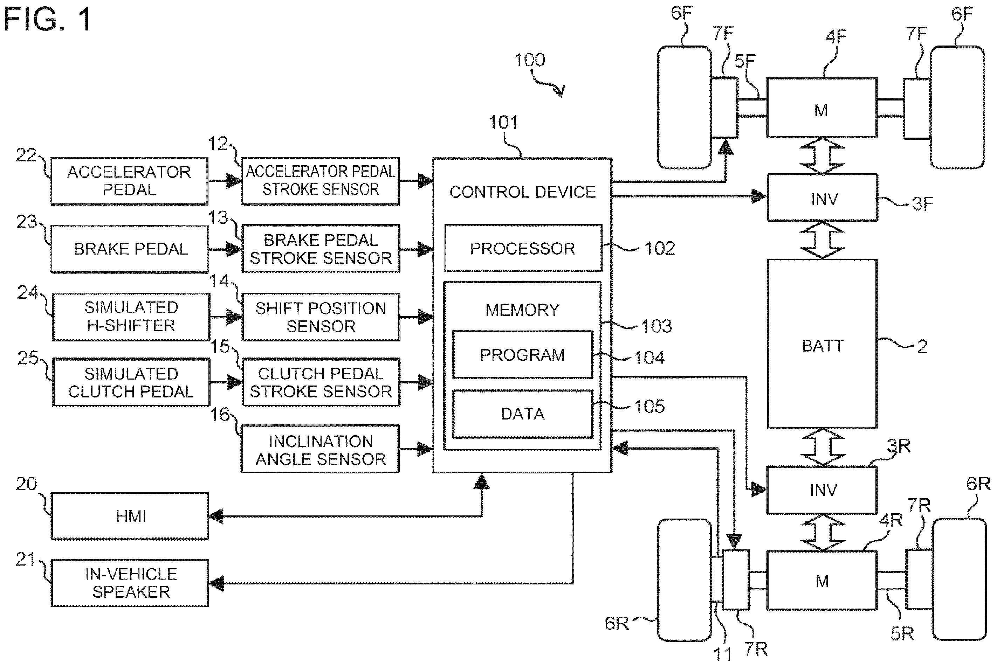

FIG. 1 is a diagram schematically showing the configuration of a battery electric vehicle 100 according to an embodiment of the present disclosure. First, the configuration of a dynamic power system of the battery electric vehicle 100 will be described with reference to FIG. 1.

The battery electric vehicle 100 includes two electric motors (M) 4F, 4R at the front and the rear, as dynamic power sources for traveling. For example, the electric motors 4F, 4R are three-phase alternating-current motors. The front electric motor 4F is connected to a front drive shaft 5F that drives front wheels 6F. The rear electric motor 4R is connected to a rear drive shaft 5R that drives rear wheels 6R. The front wheels 6F are suspended to right and left electronically-controlled front suspensions 7F that are independent from each other. The rear wheels 6R are suspended to right and left electronically-controlled rear suspensions 7R that are independent from each other.

Inverters (INV) 3F, 3R are attached to the front electric motor 4F and the rear electric motor 4R, respectively. Each of the front inverter 3F and the rear inverter 3R is connected to a battery (BATT) 2. The battery 2 stores electric energy for driving the electric motors 4F, 4R. That is, the battery electric vehicle 100 is a battery electric vehicle (BEV) that travels using the electric energy stored in the battery 2. For example, the inverters 3F, 3R are voltage-type inverters, and control the torques of the electric motors 4F, 4R by a PWM control.

### 2. Configuration of Control System of Battery Electric Vehicle

Subsequently, the configuration of a control system of the battery electric vehicle 100 will be described with reference to FIG. 1.

The battery electric vehicle 100 includes a vehicle speed sensor 11. At least one of unillustrated vehicle wheel speed sensors that are provided at the right and left front wheels 6F and the right and left rear wheels 6R is used as the vehicle speed sensor 11. Further, the battery electric vehicle 100 includes an accelerator pedal stroke sensor 12. The accelerator pedal stroke sensor 12 is provided at an accelerator pedal 22, and outputs a signal indicating the stepping amount of the accelerator pedal 22, that is, an accelerator operation amount. Furthermore, the battery electric vehicle 100 includes a brake pedal stroke sensor 13. The brake pedal stroke sensor 13 is provided at a brake pedal 23, and outputs a signal indicating the stepping amount of the brake pedal 23, that is, a brake operation amount.

The accelerator pedal 22 and the brake pedal 23 are driving operation members that are used for the driving of the battery electric vehicle 100. Separately from the driving operation members, the battery electric vehicle 100 includes a simulated gear shifting operation member that imitates an operation member that is used for gear shifting operation of a manual gear shifting internal combustion engine vehicle. The simulated gear shifting operation member includes a simulated H-shifter 24 and a simulated clutch pedal 25 described below. The simulated clutch pedal 25 is an example of the simulated clutch operation device.

The simulated H-shifter 24 is a dummy that is different from an original H-shifter. The simulated H-shifter 24 has a structure that resembles a shift stick provided at a console, and can be moved among shift positions along an H-shaped gate. However, the battery electric vehicle 100 includes no real transmission, and therefore, the shift positions of the simulated H-shifter 24 are virtual shift positions. A shift position sensor 14 is provided at the simulated H-shifter 24. The shift position sensor 14 outputs a signal indicating a shift position selected by the simulated H-shifter 24.

The simulated clutch pedal 25 is a dummy that is different from an original clutch pedal. The simulated clutch pedal 25 has a structure that resembles a clutch pedal included in a conventional manual gear shifting internal combustion engine vehicle. For example, the simulated clutch pedal 25 includes a reaction force mechanism that generates reaction force against the stepping by a driver. A beginning position of the simulated clutch pedal 25 is a position when stepping force is not given, and an ending position of the simulated clutch pedal 25 is a position when the simulated clutch pedal 25 is stepped to an innermost portion. The driver can operate the simulated clutch pedal 25 from the beginning position to the ending position against the reaction force from the reaction force mechanism. A clutch pedal stroke sensor 15 is provided at the simulated clutch pedal 25. The clutch pedal stroke sensor 15 outputs a signal indicating the stepping amount of the simulated clutch pedal 25. The battery electric vehicle 100 includes no real clutch, and therefore, the operation amount of the simulated clutch pedal 25, that is, a clutch operation amount is a virtual clutch operation amount.

The simulated clutch pedal 25 is a pedal-type operation device that is operated by a foot, but a lever-type operation device or dial-type operation device that is operated by a hand may be included as the simulated clutch operation device. The simulated clutch operation device can employ various structures as long as the driver can operate the simulated clutch operation device from beginning position to the ending position against the reaction force and can have an operational feeling for the clutch pedal included in the conventional manual gear shifting internal combustion engine vehicle, through the foot or hand.

Further, the battery electric vehicle 100 includes an inclination angle sensor 16. The inclination angle sensor 16 measures the inclination of the battery electric vehicle 100.

Further, the battery electric vehicle 100 includes a human-machine interface (HMI) 20 as an interface for the driver and an in-vehicle speaker 21. The HMI 20 includes a touch panel display. The HMI 20 displays information on the touch panel display, and accepts an input from the driver by touch operation of the touch panel display. The in-vehicle speaker 21 can output voice and artificial sound, and can provide information to the driver by voice from the in-vehicle speaker 21.

The battery electric vehicle 100 includes a control device 101. Sensors equipped in the battery electric vehicle 100 and apparatuses as control objects are connected to the control device 101 through an in-vehicle network. Various sensors are equipped in the battery electric vehicle 100, in addition to the vehicle speed sensor 11, the accelerator pedal stroke sensor 12, the brake pedal stroke sensor 13, the shift position sensor 14, the clutch pedal stroke sensor 15, and the inclination angle sensor 16.

Typically, the control device 101 is an electronic control unit (ECU). The control device 101 may be a combination of a plurality of ECUs. The control device 101 includes at least a processor 102 and a memory 103. The memory 103 includes a RAM in which data is temporarily recorded and a ROM in which programs 104 capable of being executed by the processor 102 and a variety of data 105 related to programs are saved. The program 104 is constituted by a plurality of instructions. The processor 102 reads the program 104 and the data 105 from the memory 103, executes the program 104, and generates a control signal based on signals acquired from sensors. The number of processors 102 included in the control device 101 may be one, or may be a plural number.

The control device 101 can control the battery electric vehicle 100 in a plurality of different control modes. The control mode can be selected by the driver, through the driver's touch operation of the touch panel display of the HMI 20. More specifically, by the driver's touch operation of the touch panel display of the HMI 20, a single or a plurality of programs 104 linked with the touch operation is read from the memory 103, and is executed by the processor 102. Control modes of the battery electric vehicle 100 that can be selected by the driver's operation of the HMI 20 and that are executed by the control device 101 will be described below.

### 3. Control Modes of Battery Electric Vehicle

The control modes of the battery electric vehicle 100 that can be selected in the control device 101 include at least an automatic mode and a manual mode. The automatic mode is a control mode for driving the battery electric vehicle 100 as an ordinary BEV. In the automatic mode, basically, the driver can drive the battery electric vehicle 100 simply by operating the accelerator pedal 22, the brake pedal 23, and an unillustrated steering wheel. In the automatic mode, the shift operation of the simulated H-shifter 24 and the clutch operation of the simulated clutch pedal 25 are invalid.

The manual mode is a control mode in which the battery electric vehicle 100 behaves as if the battery electric vehicle 100 was a manual gear shifting internal combustion engine vehicle. In the manual mode, it is necessary to perform the shift operation of the simulated H-shifter 24 and the clutch operation of the simulated clutch pedal 25. In the manual mode, a behavior when the gear ratio of a manual gear shifting transmission is switched is reproduced by the shift operation and the clutch operation.

The manual mode may further include a plurality of control modes. For example, the driver may be capable of deciding characteristics of the manual gear shifting internal combustion engine vehicle that are simulated by the battery electric vehicle 100, by operating the display of the HMI 20 and selecting a control mode in which options relevant to engine characteristic, engine sound, suspension characteristic, and the like are appropriately combined. The selected control mode is related to a traveling control of the battery electric vehicle 100. The traveling control of the battery electric vehicle 100 will be described below.

### 4. Traveling Control of Battery Electric Vehicle

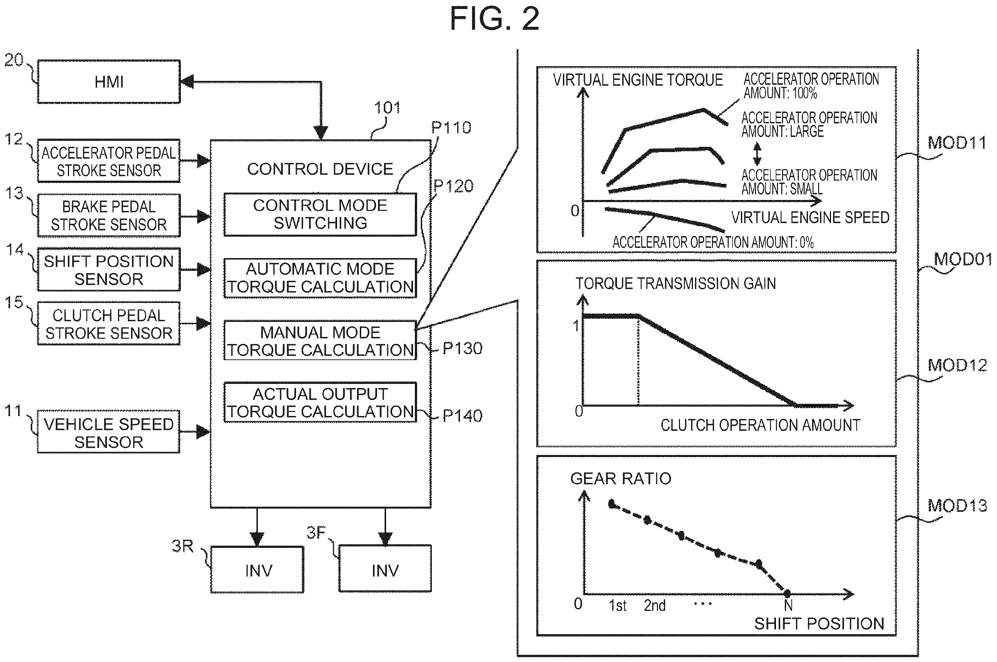

FIG. 2 is a diagram showing the configuration of the control device 101 related to the traveling control of the battery electric vehicle 100. More specifically, FIG. 2 shows the configuration related to, particularly, a torque control of the traveling control. A single or a plurality of programs 104 for the traveling control that is stored in the memory 103 is executed by the processor 102, so that the processor 102 functions as a traveling control device.

The control device 101 as the traveling control device receives a control mode signal from the HMI 20. The control mode signal includes information relevant to the control mode selected by the driver. The control device 101 executes a process P110 based on the control mode signal. In the process P110, the control mode is switched in accordance with the control mode signal. The switching of the control mode that particularly influences the traveling control is the switching between the automatic mode and the manual mode.

Hereinafter, a drive wheel torque based on the demand of the driver is referred to as a driver demand torque. In the case where the control mode is switched to the automatic mode, the control device 101 executes a process P120 for calculating the driver demand torque in the automatic mode. In the process P120, the control device 101 acquires the vehicle speed from the signal of the vehicle speed sensor 11, and acquires the accelerator operation amount from the signal of the accelerator pedal stroke sensor 12. The control device 101 has a motor torque map in which the accelerator operation amount and the vehicle speed are adopted as parameters. The driver demand torque is a torque that is obtained by the control device 101 when the vehicle speed and the accelerator operation amount are input to the motor torque map.

In the case where the control mode is switched to the manual mode, the control device 101 executes a process P130 for calculating the driver demand torque in the manual mode.

For the calculation of the drive wheel torque in the process P130, a vehicle model MOD01 is used. The vehicle model MOD01 calculates the driver demand torque from a virtual transmission torque and a speed reduction ratio. The vehicle model MOD01 includes an engine model MOD11, a clutch model MOD12, and a transmission model MOD13. An engine that is virtually realized by the vehicle model MOD01 is referred to as a virtual engine, a clutch that is virtually realized by the vehicle model MOD01 is referred to as a virtual clutch, and a transmission that is virtually realized by the vehicle model MOD01 is referred to as a virtual transmission. In the engine model MOD11, the virtual engine is modeled. In the clutch model MOD12, the virtual clutch is modeled. In the transmission model MOD13, the virtual transmission is modeled.

The engine model MOD11 calculates a virtual engine speed and a virtual engine torque. The virtual engine speed is calculated from the vehicle speed, a total speed reduction ratio, and the slip ratio of the virtual clutch. The virtual engine torque is calculated from the virtual engine speed and the accelerator operation amount. The vehicle speed is acquired from the signal of the vehicle speed sensor 11. The accelerator operation amount is acquired from the signal of the accelerator pedal stroke sensor 12. The total speed reduction ratio is a numerical value that is obtained by multiplying the gear ratio of the virtual transmission by a speed reduction ratio that is determined by a mechanical structure from the virtual transmission to the drive wheels. In the engine model MOD11, the relation between the virtual engine speed and the virtual engine torque is prescribed for each accelerator operation amount. The driver may be capable of selecting the engine characteristic of the engine model MOD11 by the operation of the HMI 20.

The clutch model MOD12 calculates a torque transmission gain. The torque transmission gain is a gain for calculating a torque transmission degree of the virtual clutch that corresponds to the clutch operation amount. The clutch operation amount is acquired from the signal of the clutch pedal stroke sensor 15. The clutch operation amount is 0% at the beginning position of the simulated clutch pedal 25, and is 100% at the ending position of the simulated clutch pedal 25. In the clutch model MOD12, the torque transmission gain is given with respect to the clutch operation amount. The torque transmission gain is converted into the clutch torque capacity of the virtual clutch, that is, into a virtual clutch torque capacity. Then, a virtual clutch torque that is input from the virtual clutch to the virtual transmission is calculated based on the comparison between the virtual clutch torque capacity and the virtual engine torque calculated in the engine model MOD11. Further, in the clutch model MOD12, a value resulting from subtracting the torque transmission gain from 1 is calculated as a slip ratio. The slip ratio is used for the calculation of the virtual engine speed in the engine model MOD11.

The transmission model MOD13 calculates a virtual gear ratio. The virtual gear ratio is a gear ratio that is determined by the virtual shift position in the virtual transmission. The virtual shift positions correspond to signals of the shift position sensor 14 on a one-to-one basis. The virtual gear ratio is set for each virtual shift position. A maximal virtual gear ratio is set for first gear, and the virtual gear ratio decreases in the order of second gear, third gear, fourth gear, ....

The transmission model MOD13 calculates the virtual transmission torque using the virtual gear ratio and the virtual clutch torque. The virtual transmission torque is a virtual torque that is output from the virtual transmission. The control device 101 controls the inverters 3F, 3R such that the output torques of the electric motors 4F, 4R are changed depending on the virtual transmission torque. The virtual transmission torque changes discontinuously depending on the switching of the virtual gear ratio. The discontinuous change in the virtual transmission torque generates torque shock in the battery electric vehicle 100, so that a similar operational feeling to the operational feeling for a vehicle including a stepped transmission is obtained.

When the driver demand torque is calculated by the process P120 or the process P130, the control device 101 executes a process P140. In the process P140, an actual output torque is calculated. The actual output torque is a torque that is actually output to the drive wheels. In the case where a hold assist control described later is not actuated, the actual output torque is the driver demand torque that is calculated by the process P120 or the process P130. The actual output torque in the case where the hold assist control is actuated will be described later.

The drive wheel torque calculated by the process P140 is the sum of torques that act on the right and left front wheels 6F and the right and left rear wheels 6R. The control device 101 controls the inverters 3F, 3R such that the calculated torque is generated by the electric motors 4F, 4R. The torque distribution between the front wheels 6F and the rear wheels 6R may be fixed, or may be capable of being changed actively or passively.

The traveling control of the battery electric vehicle 100 has been described above. Further, the control of the battery electric vehicle 100 by the control device 101 includes a sound control, in addition to the traveling control. The control device 101 as a sound control device can emit sounds that are artificially generated, from the in-vehicle speaker 21. For example, the artificial sounds that are played back from the in-vehicle speaker 21 may include a simulated engine sound that resembles the engine sound in the conventional internal combustion engine vehicle. For example, in the case where a control mode signal indicating that the manual mode has been selected is input from the HMI 20, the control device 101 generates the simulated engine sound based on the virtual engine torque and the virtual engine speed, and emits the simulated engine sound from the in-vehicle speaker 21. The reproduction of the engine sound allows the driver to have a realistic feeling as if the driver was driving a genuine manual gear shifting internal combustion engine vehicle.

### 5. Hold Assist on Sloping Road

As for this battery electric vehicle 100, a situation where the battery electric vehicle 100 is stopped halfway of a sloping road having an uphill gradient and then is restarted will be discussed. Gravity acts on the battery electric vehicle 100, and therefore, when the brake is turned off, the battery electric vehicle 100 moves rearward. In the case where the automatic mode is selected, the driver can start the battery electric vehicle 100, simply by changing the stepping pedal from the brake pedal 23 to the accelerator pedal 22, and therefore, the battery electric vehicle 100 is unlikely to greatly move rearward. On the other hand, in the case where the manual mode is selected, the operation of the simulated H-shifter 24 and the operation of the simulated clutch pedal 25 are necessary in addition to the operation of the accelerator pedal 22, and therefore, a time after the driver takes the foot off the brake pedal 23 and before the driver demand torque exceeds a torque necessary to start the battery electric vehicle 100 is longer than that in the case where the automatic mode is selected. Therefore, the battery electric vehicle 100 can greatly move rearward due to the action of gravity, before the vehicle start.

Hence, in the case where the control device 101 detects that the battery electric vehicle 100 is stopped on a road surface having an uphill gradient, the control device 101 executes the hold assist control for preventing rearward movement due to the gravity that acts on the battery electric vehicle 100. In the hold assist control, the control device 101 prevents the rearward movement of the vehicle, by generating, in the drive wheels, a torque in the same direction as the traveling direction of the vehicle. Hereinafter, the torque that is generated in the hold assist control for preventing the rearward movement is referred to as a hold assist torque.

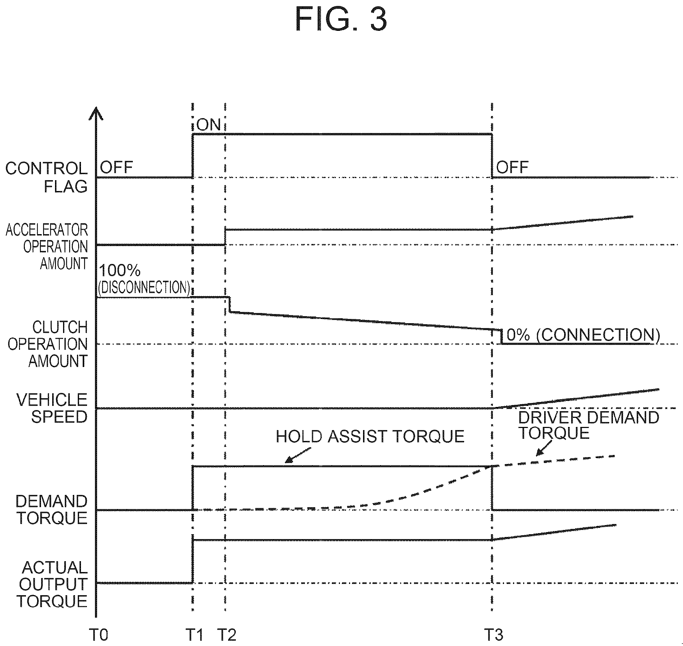

FIG. 3 is a time chart showing a control flag, the accelerator operation amount, the clutch operation amount, the vehicle speed, the demand torque and the actual output torque in the case where the manual mode is selected in the battery electric vehicle 100. The hold assist control by the control device 101 and the effect will be described below with reference to FIG. 3.

The control flag is a control flag for the hold assist control, and when the control flag is turned on, the hold assist control is actuated. The clutch operation amount is a virtual clutch operation amount that is calculated based on the signal of the clutch pedal stroke sensor 15. The demand torque includes the drive wheel torque that is demanded by the driver and the drive wheel torque that is demanded as the hold assist torque. The hold assist torque is shown by a solid line, and the driver demand torque is shown by a dotted line.

The time chart starts at time T0 when the battery electric vehicle 100 is in a vehicle stop state on the sloping road having the uphill gradient. The driver is stepping the brake pedal 23 and the simulated clutch pedal 25. The virtual clutch is disconnected, and the clutch operation amount is 100%. The drive wheel torque is not output in a period from time T0 to time T1.

When the control device 101 detects that the brake has been turned off by the driver, the control device 101 turns on the control flag. The state where the brake has been turned off by the driver is a state where a parking brake has not been applied and where the driver has taken the foot off the brake pedal 23. Although not shown in the time chart, at time T1, the driver takes the foot off the brake pedal 23 in a state where the parking brake has been released, and turns off the brake. In response to this, the control device 101 turns on the control flag for the hold assist control. Then, the output of the hold assist torque is started. The hold assist torque is the drive wheel torque that is output in the opposite direction of the gravity, that is, in the traveling direction of the battery electric vehicle 100, and that has a magnitude allowing the stop of the battery electric vehicle 100.

In the case where the hold assist torque is being output, the control device 101 selects the larger of the driver demand torque and the hold assist torque, as the actual output torque. In a period from time T1 to time T2, the driver demand torque is not being output, and therefore, the hold assist torque is adopted as the actual output torque.

At time T2, the driver changes the stepping pedal from the brake pedal 23 to the accelerator pedal 22, and the accelerator operation amount rises. Further, the driver starts the clutch operation, and decreases the clutch operation amount little by little. With the decrease in the clutch operation amount, the torque transmission gain rises, and the driver demand torque gradually rises.

In a period from time T2 to time T3, the hold assist torque is selected as the actual output torque. In this period, the driver demand torque is not large enough to prevent the battery electric vehicle 100 from moving rearward on the sloping road, but since the hold assist torque is output as the drive wheel torque, it is possible to prevent the rearward movement of the battery electric vehicle 100.

At time T3, the driver demand torque becomes equal to the hold assist torque, and after time T3, the driver demand torque exceeds the hold assist torque. At time T3, the control device 101 turns off the control flag, in response to the exceedance of the driver demand torque over the hold assist torque. The hold assist control is ended, and the output of the hold assist torque is stopped. After time T3 when the output of the hold assist torque is ended, the driver demand torque is adopted as the actual output torque. At this time, the magnitude of the driver demand torque is exceeding the magnitude of the hold assist torque that is the torque necessary to avoid the battery electric vehicle 100 from moving rearward. Therefore, the battery electric vehicle 100 starts to travel forward.

That is, when the control device 101 detects that the battery electric vehicle 100 has started the vehicle start on the sloping road, the control device 101 actuates the hold assist control. In the hold assist control, the control device 101 prevents the rearward movement of the vehicle, not by actuating the brake but by outputting the torque in the traveling direction of the vehicle. Further, the end condition of the hold assist control is the exceedance of the driver demand torque over the torque that is output by the hold assist control. Then, when the output of the hold assist torque is ended, the actual output torque is switched to the driver demand torque. That is, the output of the driver demand torque is started concurrently with the end of the output of the hold assist torque. At the time point of the end, the hold assist torque is equal to the driver demand torque, and therefore, it is possible to cause the drive wheel torque to smoothly transit to the driver demand torque, without discontinuously changing the actual output torque. In this way, it is possible to smoothly start the traveling of the battery electric vehicle 100, and to enhance the comfort level for the driver.

The hold assist control may be performed also in the case where the automatic mode is selected. By performing the hold assist control also in the automatic mode, it is possible to prevent the rearward movement of the battery electric vehicle 100 when the driver changes the stepping pedal from the brake pedal 23 to the accelerator pedal 22. However, generally, the time after the driver takes the foot off the brake pedal 23 and before the driver demand torque exceeds the hold assist torque is longer at the time of the selection of the manual mode, and therefore, the hold assist control is more effective at the time of the selection of the manual mode.

### 6. Process Example

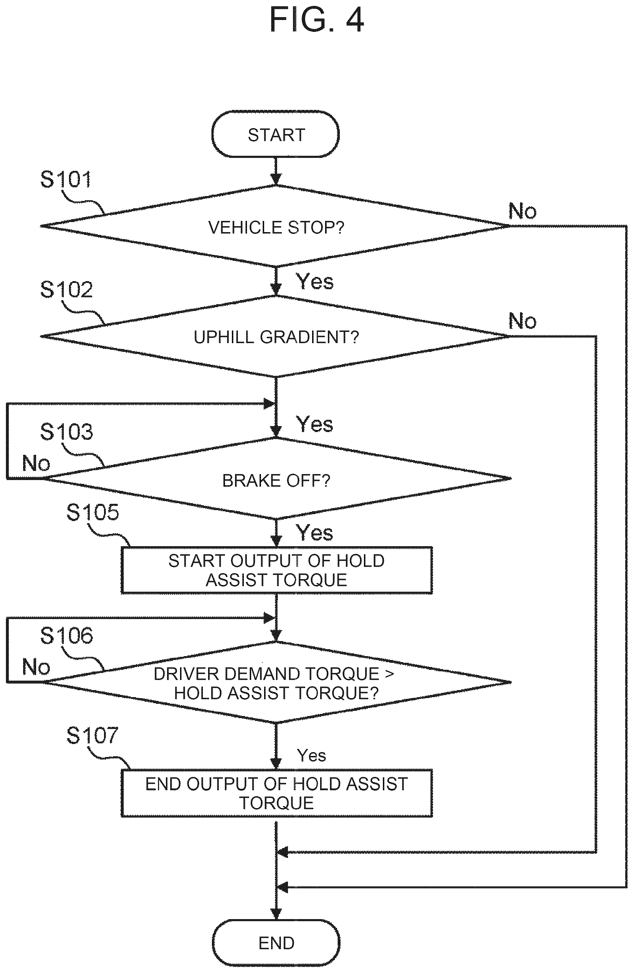

FIG. 4 is a flowchart showing a process relevant to the hold assist control by the control device 101. A sequence of processes shown in FIG. 4 is realized when a single or a plurality of programs 104 stored in the memory 103 is executed by the processor 102.

In step S101, the control device 101 determines whether the battery electric vehicle 100 is in the vehicle stop state. For example, the control device 101 may determine whether the battery electric vehicle 100 is in the vehicle stop state, based on the signal acquired from the vehicle speed sensor 11. In this case, when the vehicle speed is zero, it is determined that the battery electric vehicle 100 is in the vehicle stop state. In the case where the battery electric vehicle 100 is in the vehicle stop state (step S101; Yes), the process proceeds to step S102. On the other hand, in the case where the battery electric vehicle 100 is not in the vehicle stop state (step S101; No), the sequence of processes ends.

In step S102, the control device 101 determines whether the place of the stop of the battery electric vehicle 100 is the sloping road having the uphill gradient. The control device 101 can determine the inclination of the place of the stop of the battery electric vehicle 100, based on the information acquired from the inclination angle sensor 16. The inclination of the battery electric vehicle 100 that is acquired from the inclination angle sensor 16 is the inclination of the road surface. The control device 101 may determine that the road surface has the gradient, when the inclination of the road surface where the battery electric vehicle 100 is stopped is larger than a predetermined value, and may determine that the road surface does not have the gradient, when the inclination of the road surface is equal to or smaller than the predetermined value. In the case where the place of the stop of the battery electric vehicle 100 is the sloping road having the uphill gradient (step S102; Yes), the process proceeds to step S103. On the other hand, in the case where the place of the stop of the battery electric vehicle 100 is not the sloping road having the uphill gradient (step S102; No), the sequence of processes ends.

In step S103, the control device 101 determines whether the brake has been turned off by the driver. In the case where the brake has been turned off (step S103; Yes), the process proceeds to step S105. On the other hand, in the case where the brake has not been turned off, that is, in the case where the parking brake is applied or the brake pedal 23 is stepped (step S103; No), the determination in S103 is repeated again. In step S103, the control device 101 may determine that the brake has been turned off, when the stepping amount of the brake pedal 23 by the driver has become equal to or smaller than a predetermined amount in a state where the parking brake has been released.

In step S105, the control device 101 starts the output of the hold assist torque. The magnitude of the hold assist torque is a magnitude that allows the battery electric vehicle 100 to be stopped against the action of gravity. Alternatively, the hold assist torque may be a torque that is slightly smaller than a torque necessary for the complete stop of the battery electric vehicle 100. Further, for example, the magnitude of the torque may be computed by a feedback control in which the vehicle speed is adopted as an output value, such that the vehicle speed becomes equal to or lower than a threshold. By using the feedback control, it is possible to accurately compute the magnitude of the necessary torque even when there is a disturbance factor such as the change in the weight of the vehicle body of the battery electric vehicle 100 and other disturbance factors. When the output of the hold assist torque is started, the process proceeds to step S106.

In step S106, the control device 101 determines whether the driver demand torque has exceeded the hold assist torque. In the case where the driver demand torque has exceeded the hold assist torque (step S106; Yes), the process proceeds to step S107. On the other hand, in the case where the driver demand torque is equal to or smaller than the hold assist torque (step S106; No), the determination in step S106 is repeated again.

In step S107, the control device 101 ends the output of the hold assist torque. By the end of the output of the hold assist torque, the actual output torque is switched to the driver demand torque. When the output of the hold assist torque ends, the sequence of processes ends.

In the case where the driver actuates the brake in a period after the start of the output of the hold assist torque and before the exceedance of the driver demand torque over the hold assist torque, the control device 101 may end the output of the hold assist torque. Thereby, it is possible to prevent a needless output of the drive wheel torque, and to improve the electricity consumption of the battery 2.

### 7. Process Example for Downhill Slope

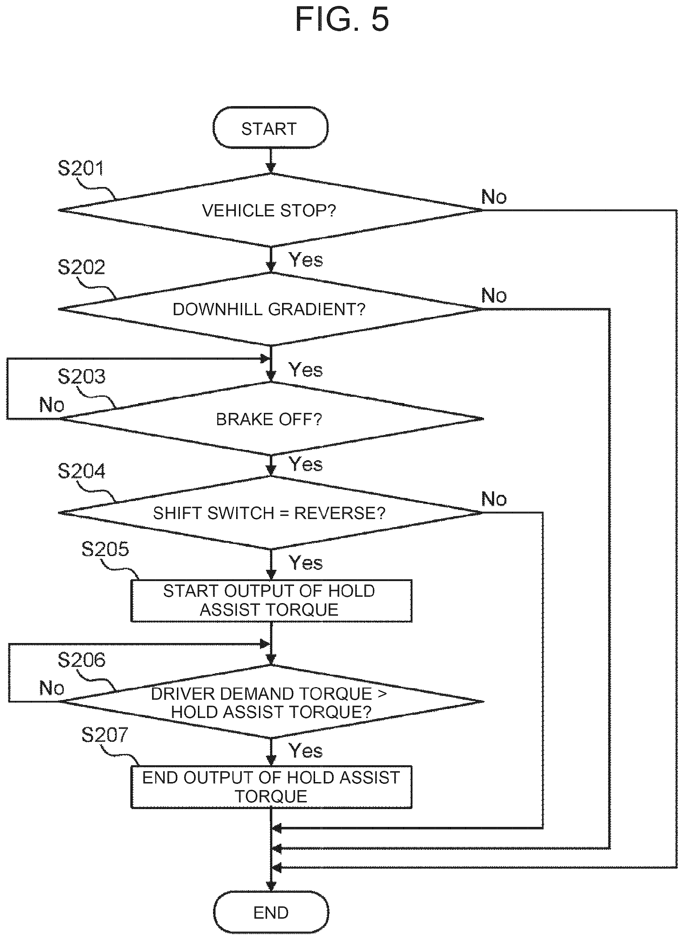

In the case where the driver intends to move rearward the battery electric vehicle 100 stopped on a downhill slope, the vehicle can move forward due to gravity. Therefore, the hold assist control is effective also in a situation where the battery electric vehicle stopped on the road surface having the downhill gradient starts backward. FIG. 5 is a flowchart showing an example of a process relevant to a hold assist control for the road surface having the downhill gradient.

The process in step S201 is the same as the process in step S101 in FIG. 4. In step S202, the control device 101 determines whether the place of the stop of the battery electric vehicle 100 is the sloping road having the downhill gradient. Similarly to the step S102 in FIG. 4, the control device 101 can perform this determination, based on the information acquired from the inclination angle sensor 16. Further, the control device 101 may determine that the road surface has the gradient, when the inclination of the road surface where the battery electric vehicle 100 is stopped is larger than a predetermined value, and may determine that the road surface does not have the gradient, when the inclination of the road surface is equal to or smaller than the predetermined value. In the case where the place of the stop of the battery electric vehicle 100 is the sloping road having the downhill gradient (step S202; Yes), the process proceeds to step S203. On the other hand, in the case where the place of the stop of the battery electric vehicle 100 is not the sloping road having the downhill gradient (step S202; No), the sequence of processes ends.

The process in step S203 is the same as the process in step S103 in FIG. 4. In the case where the brake has been turned off (step S203; Yes), the process proceeds to step S204.

In step S204, the control device 101 determines whether the shift switch is set to the reverse. In the case where the manual mode is selected, whether the shift position of the simulated H-shifter 24 is at the position of the reverse is determined based on the signal of the shift position sensor 14. In the case where the shift switch is set to the reverse (step S204; Yes), the process proceeds to step S205. On the other hand, in the case where the shift switch is not set to the reverse (step S204; No), the sequence of processes ends.

In step S205, the control device 101 starts the output of the hold assist torque. The torque that is output at this time is the drive wheel torque in the opposite direction of the gravity, that is, in the opposite direction of the traveling direction of the battery electric vehicle 100. When the output of the torque is started, the process proceeds to step S206.

The process in step S206 is the same as the process in step S106 in FIG. 4. However, each of the driver demand torque and the hold assist torque that are output is the drive wheel torque in the opposite direction of the traveling direction of the battery electric vehicle 100. The determination is performed based on the comparison between the driver demand torque in the opposite direction of the traveling direction of the battery electric vehicle 100 and the hold assist torque in the opposite direction of the traveling direction of the battery electric vehicle 100. When the driver demand torque exceeds the hold assist torque, the process proceeds to step S207, and the output of the hold assist torque ends. Similarly to the hold assist torque for the uphill gradient, the hold assist is switched to the driver demand torque, and after that, the driver demand torque is output as the drive wheel torque.

By the above process, also on the road surface having the downhill gradient, it is possible to prevent the battery electric vehicle 100 from moving forward due to gravity, without the driver's intention. Further, at the time point of the end, the hold assist torque is equal to the driver demand torque, and therefore, it is possible to cause the drive wheel torque to smoothly transit to the driver demand torque, without discontinuously changing the actual output torque. In this way, it is possible to smoothly start the traveling of the battery electric vehicle 100.

## Claims

1. A battery electric vehicle (100) that includes an electric motor (4F, 4R) as a drive source, the battery electric vehicle (100) comprising:
a driving operation member (22, 23) that is used for driving of the battery electric vehicle (100);
a simulated gear shifting operation member (24, 25) that imitates an operation member that is used for gear shifting operation of a manual gear shifting internal combustion engine vehicle; and
a control device (101) configured to control the battery electric vehicle (100) depending on operation of the driving operation member (22, 23), wherein:
the driving operation member (22, 23) includes an accelerator pedal (22);
the simulated gear shifting operation member (24, 25) includes
a simulated H-shifter (24) that simulates an H-shifter of a manual transmission, and
a simulated clutch operation device (25) that simulates a clutch operation device;
the control device (101) is configured to
execute, by selection by a driver, a control mode in which a driver demand torque for driving the electric motor (4F, 4R) is calculated based on an operation amount of the accelerator pedal (22) and operation of the simulated gear shifting operation member (24, 25), and
perform a hold assist for preventing rearward movement or forward movement of the battery electric vehicle (100) due to gravity that acts on the battery electric vehicle (100), when the control device (101) detects that the battery electric vehicle (100) is stopped on a road surface having a gradient in the control mode; and
the hold assist includes
outputting a hold assist torque that is a drive wheel torque in an opposite direction of the gravity,
the battery electric vehicle (100) being **characterized in that** the hold assist includes ending the output of the hold assist torque and performing switching to output of the driver demand torque, in response to exceedance of the driver demand torque over the hold assist torque, wherein at the time point of the ending of the output of the hold assist torque, the hold assist torque is equal to the driver demand torque.

2. The battery electric vehicle (100) according to claim 1, wherein the hold assist includes outputting the hold assist torque, on condition that the road surface having the gradient is a road surface having an uphill gradient.

3. The battery electric vehicle (100) according to claim 1, wherein the hold assist includes outputting the hold assist torque, on condition that the road surface having the gradient is a road surface having a downhill gradient and a shift switch of the battery electric vehicle (100) is set to reverse.

4. The battery electric vehicle (100) according to claim 2 or 3, wherein the hold assist includes starting the output of the hold assist torque, in response to turning-off of brake operation by the driver, wherein the brake operation refers to stepping on the brake pedal (23) by the driver.

5. The battery electric vehicle (100) according to claim 4, wherein the hold assist includes ending the output of the hold assist torque, when the brake operation by the driver is performed in a period after the start of the output of the hold assist torque and before the exceedance of the driver demand torque over the hold assist torque.

6. The battery electric vehicle (100) according to claim 1, wherein
the control device (101) is configured to calculate the driver demand torque using a vehicle model (MOD01), and
the vehicle model (MOD01) includes an engine model (MOD11) in which a virtual engine is modeled, a clutch model (MOD12) in which a virtual clutch is modeled, and a transmission model (MOD13) in which a virtual transmission is modeled.

## Patentansprüche

1. Batterieelektrofahrzeug (100), das einen Elektromotor (4F, 4R) als Antriebsquelle umfasst, wobei das Batterieelektrofahrzeug (100) umfasst:
ein Fahrbetätigungselement (22, 23), das zum Fahren des Batterieelektrofahrzeugs (100) verwendet wird;
ein Betätigungselement (24, 25) für simuliertes Gangschalten, das ein Betätigungselement imitiert, das für eine Gangschaltungsbetätigung eines Fahrzeugs mit Verbrennungskraftmaschine und manueller Gangschaltung verwendet wird; und
eine Steuervorrichtung (101), die dazu konfiguriert ist, das Batterieelektrofahrzeug (100) in Abhängigkeit von der Betätigung des Fahrbetätigungselements (22, 23) zu steuern, wobei:
das Fahrbetätigungselement (22, 23) ein Fahrpedal (22) umfasst;
das Betätigungselement (24, 25) für simuliertes Gangschalten umfasst
einen simulierten H-Schalthebel (24), der einen H-Schalthebel eines manuellen Getriebes simuliert, und
eine simulierte Kupplungsbetätigungsvorrichtung (25), die eine Kupplungsbetätigungsvorrichtung simuliert;
wobei die Steuervorrichtung (101) konfiguriert ist zum
Durchführen, durch eine Auswahl durch einen Fahrer, eines Steuermodus, in dem ein vom Fahrer verlangtes Drehmoment zum Antreiben des Elektromotors (4F, 4R) basierend auf einem Betätigungsbetrag des Fahrpedals (22) und der Betätigung des Betätigungselements (24, 25) für simuliertes Gangschalten berechnet wird, und
Ausführen einer Anfahrunterstützung, um eine Rückwärtsbewegung oder eine Vorwärtsbewegung des Batterieelektrofahrzeugs (100) auf Grund der Schwerkraft, die auf das Batterieelektrofahrzeug (100) einwirkt, zu verhindern, wenn die Steuervorrichtung (101) detektiert, dass das Batterieelektrofahrzeug (100) auf einer Straßenoberfläche, die ein Gefälle aufweist, im Steuermodus steht; und
wobei die Anfahrunterstützung umfasst
Ausgeben eines Drehmoments zur Anfahrunterstützung, wobei es sich um ein Antriebsraddrehmoment in einer zur Schwerkraft entgegengesetzten Richtung handelt,
wobei das Batterieelektrofahrzeug (100) **dadurch gekennzeichnet ist, dass** die Anfahrunterstützung das Beenden der Ausgabe des Drehmoments zur Anfahrunterstützung und das Ausführen des Schaltens, um das vom Fahrer verlangte Drehmoment auszugeben, als Reaktion darauf, dass das vom Fahrer verlangte Drehmoment das Drehmoment zur Anfahrunterstützung überschreitet, umfasst, wobei zu dem Zeitpunkt der Beendigung der Ausgabe des Drehmoments zur Anfahrunterstützung das Drehmoment zur Anfahrunterstützung gleich dem vom Fahrer verlangten Drehmoment ist.

2. Batterieelektrofahrzeug (100) nach Anspruch 1, wobei die Anfahrunterstützung das Ausgeben des Drehmoments zur Anfahrunterstützung umfasst, unter der Bedingung, dass die Straßenoberfläche, die das Gefälle aufweist, eine Straßenoberfläche mit einem Bergaufgefälle ist.

3. Batterieelektrofahrzeug (100) nach Anspruch 1, wobei die Anfahrunterstützung das Ausgeben des Drehmoments zur Anfahrunterstützung umfasst, unter der Bedingung, dass die Straßenoberfläche mit dem Gefälle eine Straßenoberfläche mit einem Bergabgefälle ist und ein Gangschalter des Batterieelektrofahrzeugs (100) in den Rückwärtsgang eingelegt ist.

4. Batterieelektrofahrzeug (100) nach Anspruch 2 oder 3, wobei die Anfahrunterstützung das Beginnen der Ausgabe des Drehmoments zur Anfahrunterstützung als Reaktion auf das Ausschalten einer Bremsbetätigung durch den Fahrer umfasst, wobei sich die Bremsbetätigung auf das Treten des Bremspedals (23) durch den Fahrer bezieht.

5. Batterieelektrofahrzeug (100) nach Anspruch 4, wobei die Anfahrunterstützung das Beenden der Ausgabe des Drehmoments zur Anfahrunterstützung umfasst, wenn die Bremsbetätigung durch den Fahrer in einer Periode nach dem Beginn der Ausgabe des Drehmoments zur Anfahrunterstützung, und bevor das vom Fahrer verlangte Drehmoment das Drehmoment zur Anfahrunterstützung überschreitet, ausgeführt wird.

6. Batterieelektrofahrzeug (100) nach Anspruch 1, wobei
die Steuervorrichtung (101) dazu konfiguriert ist, das vom Fahrer verlangte Drehmoment unter Verwendung eines Fahrzeugmodells (MOD01) zu berechnen, und
das Fahrzeugmodell (MOD01) ein Motormodell (MOD11), in dem ein virtueller Motor modelliert wird, ein Kupplungsmodell (MOD12), in dem eine virtuelle Kupplung modelliert wird, und ein Getriebemodell (MOD13), in dem ein virtuelles Getriebe modelliert wird, umfasst.

## Revendications

1. Véhicule électrique à batterie (100) qui comprend un moteur électrique (4F, 4R) en tant que source d'entraînement, le véhicule électrique à batterie (100) comprenant :
un élément de commande d'entraînement (22, 23) qui est utilisé pour l'entraînement du véhicule électrique à batterie (100) ;
un élément de commande de changement de vitesse simulé (24, 25) qui imite un élément de commande qui est utilisé pour effectuer une commande de changement de vitesse sur un véhicule à moteur à combustion interne à boîte de vitesses manuelle ; et
un dispositif de commande (101) configuré pour commander le véhicule électrique à batterie (100) en fonction de la commande de l'élément de commande d'entraînement (22, 23), dans lequel :
l'élément de commande d'entraînement (22, 23) comprend une pédale d'accélérateur (22) ;
l'élément de commande de changement de vitesse simulé (24, 25) comprend :
un levier de vitesse à grille en H simulé (24) qui simule un levier de vitesse à grille en H d'une transmission manuelle, et
un dispositif de commande d'embrayage simulé (25) qui simule un dispositif de commande d'embrayage ;
le dispositif de commande (101) est configuré pour :
exécuter, sur sélection d'un conducteur, un mode de commande dans lequel un couple demandé par le conducteur pour l'entraînement du moteur électrique (4F, 4R) est calculé sur la base d'une quantité d'actionnement de la pédale d'accélérateur (22) et de l'actionnement de l'élément de commande de changement de vitesse simulé (24, 25), et
effectuer une assistance au maintien destinée à empêcher un déplacement vers l'arrière ou un déplacement vers l'avant du véhicule électrique à batterie (100) sous l'effet de la gravité qui agit sur le véhicule électrique à batterie (100), lorsque le dispositif de commande (101) détecte que le véhicule électrique à batterie (100) est à l'arrêt sur une surface de route présentant une pente dans ledit mode de commande ; et
l'assistance au maintien comprend :
la production d'un couple d'assistance au maintien qui est un couple appliqué aux roues motrices dans une direction opposée à celle de la gravité,
le véhicule électrique à batterie (100) étant **caractérisé en ce que** l'assistance au maintien comprend l'arrêt de la production du couple d'assistance au maintien et la réalisation de la commutation vers la production du couple demandé par le conducteur en réponse au dépassement du couple demandé par le conducteur par rapport au couple d'assistance au maintien, dans lequel au moment de l'arrêt de la production du couple d'assistance au maintien, le couple d'assistance au maintien est égal au couple demandé par le conducteur.

2. Véhicule électrique à batterie (100) selon la revendication 1, dans lequel l'assistance au maintien comprend la production du couple d'assistance au maintien, à condition que la surface de route présentant la pente soit une surface de route ayant une pente ascendante.

3. Véhicule électrique à batterie (100) selon la revendication 1, dans lequel l'assistance au maintien comprend la production du couple d'assistance au maintien, à condition que la surface de route présentant la pente soit une surface de route présentant une pente descendante et qu'un sélecteur de marche du véhicule électrique à batterie (100) soit placé en position de marche arrière.

4. Véhicule électrique à batterie (100) selon la revendication 2 ou 3, dans lequel l'assistance au maintien comprend le démarrage de la production du couple d'assistance au maintien en réponse à la cessation de l'actionnement du frein par le conducteur, dans lequel l'actionnement du frein fait référence à l'enfoncement de la pédale de frein (23) par le conducteur.

5. Véhicule électrique à batterie (100) selon la revendication 4, dans lequel l'assistance au maintien comprend l'arrêt de la production du couple d'assistance au maintien, lorsque l'actionnement du frein par le conducteur est réalisé dans une période après le démarrage de la production du couple d'assistance au maintien et avant le dépassement du couple demandé par le conducteur par rapport au couple d'assistance au maintien.

6. Véhicule électrique à batterie (100) selon la revendication 1, dans lequel :
le dispositif de commande (101) est configuré pour calculer le couple demandé par le conducteur en utilisant un modèle de véhicule (MOD01), et
le modèle de véhicule (MOD01) comprend un modèle de moteur (MOD11) dans lequel un moteur virtuel est modélisé, un modèle d'embrayage (MOD12) dans lequel un embrayage virtuel est modélisé et un modèle de transmission (MOD13) dans lequel une transmission virtuelle est modélisée.
